# EUROPÄISCHE PATENTSCHRIFT

(11) **EP 1 291 069 B1**
(45) Veröffentlichungstag und Bekanntmachung des Hinweises auf die Patenterteilung: **05.01.2005**
(21) Anmeldenummer: 01120841.0
(22) Anmeldetag: 30.08.2001
(51) Int. Cl.: B01D 53/68, B01D 53/70, F23G 7/06

(54) **Verfahren und Einrichtung zur Reinigung insbesondere von fluorhaltigen Abgasen in einem Brenner mit räumlicher Trennung der Einspeisung von Gasen**
Process and apparatus for purifying waste gases, particularly fluor-containing, by means of a burner with separated introduction of feed gases
Procédé et dispositif pour la purification d'effluents gazeux, en particulier chargés avec des composés fluorés, dans une chambre de combustion avec alimentation separée des gaz

(43) Veröffentlichungstag der Anmeldung: 12.03.2003
(73) Patentinhaber: DAS-DÜNNSCHICHT ANLAGEN SYSTEME GmbH DRESDEN, D-01217 Dresden (DE)
(72) Erfinder: Reichardt, Horst, Dr., 01219 Dresden (DE); Gehmlich, Konrad, 01662 Meissen (DE); Frenzel, Andreas, Dr., 01219 Dresden (DE); Wiesenberg, Wido, 01109 Dresden (DE)
(74) Vertreter: Schneck, Herbert, Dipl.-Phys., Dr.

(56) Entgegenhaltungen:
- EP-A- 0 735 321
- EP-A- 0 768 109
- EP-A- 0 819 887
- DE-A- 4 419 193

## Beschreibung

Die Erfindung betrifft ein Verfahren zur Reinigung von schadstoffhaltigen Abgasen durch thermisch-chemische Umsetzung in der Flamme eines Brenners in einer Brennkammer.

In technischen Anlagen, insbesondere in Anlagen zur chemischen Dampfphasenabscheidung und zum Abtragen von Material durch Plasmaprozesse fallen schadstoffhaltige Abgase an. Diese Abgase enthalten u.a. fluorhaltige Kohlenwasserstoffe oder andere Fluorverbindungen. Im allgemeinen sind jedoch inerte Gase, wie Argon oder Stickstoff, Hauptbestandteile der Abgase. Die Schadstoffe oder deren Reaktionsprodukte wirken toxisch bzw. umweltbelastend und müssen deshalb gereinigt werden.

Aus der gattungsgemäße EP-A 0 819 887 ist eine Einrichtung zur Reinigung schadstoffhaltiger Abgase bekannt, die einen Brenner mit einer zentralen Zuführung und zwei ringförmigen, koaxialen Zuführungen aufweist. Die zentrale Zuführung besteht aus einer Bohrung, die äußere Zuführung aus mehreren Bohrungen mit gleichem Abstand und die mittlere Zuführung aus einem geschlossenen Spalt.

Zur Abgasreinigung ist auch eine ganze Reihe weiterer Verfahren bekannt. Sehr häufig erfolgt die Reinigung durch Sorption der Schadgase aus dem Abgas, z.B. in oxidierender wässriger Lösung (DE 3342816).

Schadstoffe, die auf diese Weise nicht oder wenig effizient sorbiert werden, können durch Verfahren der chemischen Umsetzung, z.B. durch thermische Zersetzung (EU 0384803) durch Aufheizen oder durch Verbrennen in sauerstoffhaltiger Umgebung (US 5183 646), umgewandelt werden. Geschieht dies durch Verbrennen, müssen Abgase mit hohem Inertgasanteil in eine Brenngasflamme, z.B. aus einem Erdgas- oder Wasserstoff-Sauerstoff-Gemisch, eingeführt werden. Schädliche Sekundärprodukte der Umwandlung werden anschließend, z.B. durch Sorptions- oder Waschprozesse, aus dem Abgas beseitigt.

Bei der Abgasreinigung handelt es sich in der Regel um einen mehrstufigen Prozess, bei dem Teilprozesse, wie thermische Zersetzung oder Oxidation, Kühlung, Sorption, Hydrolyse und Auswaschen fester Reaktionsprodukte ablaufen (EP 0 347 753 A1). Dazu wird das Abgas nacheinander z.B. durch eine Einrichtung mit einer Brennkammer und mindestens eine weitere, z.B. eine solche, die nach dem Waschprinzip wirkt, geleitet. Es sind auch Einrichtungen zur Reinigung von Abgas vorgeschlagen worden, bei denen das Abgas nacheinander durch eine Brennkammer zur Verbrennung der Schadstoffe und eine Waschkammer geleitet wird, die konstruktiv zu einer Einheit zusammengefasst sind (EP 0 347 753 A1).

Ein Nachteil solcher Verfahren und Einrichtungen mit thermischer Zersetzung der Schadstoffe in einer Brennkammer und mit einer Waschkammer sind die thermische und elektrolytische Korrosion der Wandflächen, insbesondere der Brennkammer, unter der Wirkung gasförmiger Reaktionsprodukte der Verbrennung. Kritisch erhöht wird diese Korrosion durch die hohe Temperatur der Verbrennungsprodukte, insbesondere wenn diese z.B. Halogenwasserstoffe und Wasserdampf enthalten.

Diesen Nachteil kann man eliminieren, wenn in einer einzigen Reaktionskammer Teilprozesse der Reinigung kombiniert werden, in dem das verbrannte Abgas durch ein fein verteiltes Sorptions- bzw. Kühlmittel geführt wird, oder mit einem solchen Flüssigkeitsfilm an den Wandflächen der Brennkammer in Kontakt gebracht wird (DE 43 200 44). Die beiden zuletzt genannten Lösungen haben jedoch eine geringe Effizienz hinsichtlich ihrer Reinigungswirkung, wenn man sie für Abgase mit fluorierten Kohlenwasserstoffen bzw. anderen Fluorverbindungen anwendet. Bei vertretbarem Verbrauch von Brenngas enthalten so die gereinigten Abgase noch kritisch hohe Anteile an Schadstoffen. Die Kühlung der Reaktorwände verringert zwar deren Korrosion, führt aber eher zur Verschlechterung der Effizienz der Reinigung. Eine Verbesserung der Effizienz der Reinigung in Richtung eines niedrigen Schadstoffgehaltes im gereinigten Abgas kann zwar in gewissem Umfang durch Erhöhung der Brenngasmenge relativ zur Menge des zugeführten Abgases erzielt werden, jedoch ist dieser Weg wegen des erhöhten Brenngasverbrauches mit einer kritischen Verschlechterung der Ökonomie der Abgasreinigung verbunden.

Da in der Brenngasflamme mit Abgaszufuhr im allgemeinen mehrere Reaktionen ablaufen, deren wichtigste die Verbrennung des Brenngases (z.B. Propan, Methan, Erdgas oder Wasserstoff) unter Einwirkung des mit zugeführten Sauerstoffes zum Zwecke der thermischen Aktivierung der Schadgase und die chemische Umsetzung der Schadgase in hydrolisierbare und absorbierbare bzw. unschädliche Verbindungen sind, ist auf Grund der Reaktionskinetik nicht zu erwarten, dass die gewünschte Umsetzung der Schadgase vollständig erfolgt. Dies gilt insbesondere in einer einfachen Flamme, auch wenn alle Reaktanden (Brenngas, Sauerstoff und Schadgas) im stöchiometrischen Verhältnis zugeführt werden. Infolge des hohen Inertgasanteiles im Schadgas wird die Reaktionskinetik ungünstig beeinflusst und damit die Umsetzung des Schadgases anteilmäßig weiter verringert.
Eine Erhöhung des Brenngasanteiles gegenüber dem stöchiometrischen Verhältnis für alle Reaktanden, verbessert zwar die Schadstoffumsetzung, führt jedoch zum Ausstoß unverbrannter auch schädlicher Brenngase, die auch schädlich sind, aus der Reinigungsanlage. Eine Erhöhung des Sauerstoffanteiles im Brenngasgemisch gegenüber dem stöchiometrischen Verhältnis führt andererseits zur kritischen Verschlechterung der Schadstoffumsetzung, insbesondere für fluorhaltige Abgase und damit zu unvertretbar hohen restlichen Schadstoffanteilen im gereinigten Abgas.

Fortschritte in der Reinigung von schadstoffhaltigen Abgasen, insbesondere mit fluorhaltigen Verbindungen, durch thermisch-chemische Umsetzung in einer Brenngasflamme wurden durch eine Lösung erzielt, bei der die Abgase in einen Brenner zentral eingelassen werden, in den räumlich getrennt zwei Brenngas-Sauerstoff-Gemische unterschiedlicher Zusammensetzung und damit unterschiedlich thermisch-chemischer Wirkung zugeführt werden. Die Ausbildung unterschiedlich thermisch-chemisch wirkender Bereiche wird gezielt gesteuert durch räumlich getrennte Zuführung und durch die Auswahl der chemischen Zusammensetzung der zugeführten Brenngas-Sauerstoff-Gemische, z.B. durch Brenngasüberschuss für den reduzierenden und durch Sauerstoffüberschuss für den oxidierenden Flammenbereich (EP 0 735 321), gewährleistet.

Es ist auch vorgeschlagen worden, Zusatzluft, und dadurch auch zusätzlichen Sauerstoff, durch ein im Zentrum des Brenners angeordnetes Rohr in die Flamme zu leiten. Dies würde jedoch zunächst die reduzierende Wirkung der Flamme im inneren Flammenbereich herabsetzen. Es muß aber diese Wirkung weitgehend beibehalten werden und außerdem an der Spitze der Flamme die oxidierende Wirkung erhöht werden. Dies soll dadurch erreicht werden, dass besagtes Rohr über die Ebene des Brenners in die Flamme hinein ragt.

Entscheidend für die effizienzerhöhende Wirkung der Schadgasreinigung ist aber gerade die Ausdehnung des reduzierenden Flammenbereiches. Dieser scheint, bei der letztgenannten Lösung jedoch nur gering und wenig zielgenau zu steuern zu sein. Den reduzierenden Flammenbereich einschränkend wird nicht nur Sauerstoff vom Mantel der Flamme aus wirksam, sondern auch noch im Kern der Flamme.

Auch bei der gezielt gesteuerten Erzeugung von reduzierendem inneren und oxidierendem äußeren Flammenbereich mit Hilfe räumlich getrennter Zuführung vorwiegend von reduzierendem und vorwiegend oxidierendem Brenngasgemisch ergeben sich bei der technischen Anwendung Einschränkungen. Bei Zuführung von z.B. 60 Liter pro Minute Abgas, für das der Schadgasanteil nur wenige Prozent beträgt, beträgt die Zufuhr von Brenngasgemisch für den inneren reduzierend wirkenden Flammenbereich ca. 20 Liter pro Minute. Die Abgaszufuhr wirkt also wegen dieses Volumenverhältnisses in der Flamme stark kühlend. Die für die thermische Reaktion unter reduzierenden Bedingungen erforderlichen Temperaturen werden infolge dessen nur in einem bestimmten Abstand vom Brenner und nur in einem begrenzten Teil des reduzierend wirkenden Flammenbereiches erzielt. Andererseits muss in dem oxidierend wirkenden Flammenbereich Sauerstoff in einem solchen Umfang zugeführt werden, dass die vollständige Oxidation des Brenngases und sekundärer Schadstoffe, z.B. CO, gesichert ist. Infolge dessen wird der reduzierende Flammenbereich auch vom Mantel der Flamme her stark eingeschränkt.

Auch daraus ergeben sich für die zuletzt angeführten technische Lösungen zur Abgasreinigung also Nachteile. Ein weiterer Nachteil bekannter Lösungen besteht darin, dass bei gegebenem Volumen an Brenngas und gegebenem Volumen an Schadgas die Effizienz der Schadgasbeseitigung in einer Flamme limitiert ist. Außerdem ist nachteilig, dass für höhere Abgasströme bei gegebenen Abmessungen der Flamme bzw. des Brenners eine optimale Wirkungsweise nicht mehr gegeben ist.

Der Erfindung liegt die Aufgabe zugrunde, die Reinigung von Abgasen durch thermisch-chemische Umsetzung in der Brenngasflamme eines Brenners auch für größere Volumina von Abgasen mit höchster Effizienz hinsichtlich der Beseitigung der Schadstoffe zu gewährleisten. Außerdem besteht die Aufgabe darin, zu sichern, dass auch die bei der Reaktion in der Brenngasflamme entstehenden Sekundärprodukte effektiv verbrannt werden. Weiterhin sollen auch keine unverbrannten Bestandteile des Brenngases im gereinigten Abgas enthalten sein. Die Entstehung sekundärer Schadstoffe in der Flamme, wie z.B. Kohlenmonoxid oder Stickoxid, im Reinigungsprozess ist zu vermeiden.

Erfindungsgemäß wird die Aufgabe durch ein Verfahren nach Anspruch 1 gelöst.

Das Verfahren geht davon aus, dass in einer Brennkammer mit einem Brenner zur Erzeugung einer Brenngasflamme ein Brenngas-Sauerstoff-Gemisch genutzt wird und das in die Flamme des Brenners das Abgas, welches die Schadstoffe, insbesondere fluorhaltige Kohlenwasserstoffe oder andere Fluorverbindungen enthält, zugeführt wird. In der Flamme des Brenners, in der durch gezielte und örtlich getrennte Zufuhr reduzierende und oxidierende Bereiche wirksam gemacht sind, erfolgt die thermisch-chemische Umsetzung der Schadstoffbestandteile des Abgases. Das so behandelte Abgas enthält insbesondere gasförmige Reaktionsprodukte der Schadstoffe und des Brenngases. Es wird anschließend in einer Wascheinrichtung nachbehandelt.

Erfindungsgemäß wird über dem Brenner durch Einlass eines Brenngas-Sauerstoff-Gemisches zentral ein Flammenbereich 1 und durch getrennten Einlass weiteren Brenngas-Sauerstoff-Gemisches ein umhüllender Flammenbereich 2 erzeugt. Beide Flammenbereiche werden mit einem unterstöchiometrischen, d.h. durch einen Überschuss an Brenngas gekennzeichneten Brenngas-Sauerstoff-Gemisch gespeist. In die Grenzfläche der Flammenbereiche 1 und 2 wird über einen ringspaltartigen Einlass im Brenner das Schadgas koaxial eingeführt.
Als Brenngas wird z.B. Propan, Methan, Stadtgas, Erdgas oder Wasserstoff verwendet. Das Brenngas-Sauerstoff-Gemisch enthält neben dem Brenngas Sauerstoff. Gegenüber dem stöchiometrischen Verhältnis des Brenngasgemisches (beispielsweise Propan zu Sauerstoff C₃H₈ : O₂ = 1 : 5 oder CH₄ : O₂ = 1 : 2), das ohne Rückstand an Brenngas zu CO₂ und H₂O verbrennt, wird unterstöchiometrisches Brenngas-Sauerstoff-Gemisch, das heißt ein solches mit einem Überschuss an Brenngas eingelassen.

Durch die Zufuhr von unterstöchiometrischem Brenngas-Sauerstoff-Gemisch bildet sich eine Flamme aus, in der das Brenngas, z.B. C₃H₈ oder CH₄, nur unvollständig zu CO₂ und H₂O verbrennt. Es steht in der Flamme ein Überfluss von aktivierten, wasserstoffhaltigen Komponenten bzw. Radikalen zur Verfügung, sie wirken in der Flamme reduzierend auf Verbindungen oder Radikale der thermischen Zersetzung/des Schadgases. Reaktionsgleichgewichte sind in der zur Schadstoffbeseitigung erforderlichen Richtung verschoben, z.B. in Richtung der Bildung von CH₄ und flüchtigem HF aus Fluorkohlenwasserstoffen.

Erfmdungsgemäß werden durch den besagten Einlass des Brenngases zwei getrennte sich tangierende, reduzierend wirkende Flammenbereiche geschaffen, von denen der Flammenbereich 2 den Flammenbereich 1 umhüllt. In die Grenzfläche der zwei Flammenbereiche wird das Schadgas eingelassen. Das Schadgas besteht in der Regel aus einem Gemisch aus einem fluorhaltigen Schadstoff, z.B. C₂F₆, CF₄, CHF₃, SF₆ und einem inerten Gas, z.B. Argon oder Stickstoff. Die Art der Zuführung des Schadgases führt zum einen dazu, dass die für die Reaktion der Schadgasbestandteile erforderlichen Temperaturbedingungen günstiger sind als bei zentralem Einlass des Schadgases in die Flamme. Zum anderen ist auf einer längeren Wegstrecke bzw. in einem größeren Volumen in der Flamme für das Schadgas die Ausbildung der effektiveren reduzierenden Bedingungen gewährleistet.

Aufgrund der naturgemäß in der Grenzfläche zwischen den beiden Flammenbereichen 1 und 2 gegebenen Temperatur- und Strömungsgeschwindigkeitsdifferenzen der Verbrennungsprodukte sind außerdem diese Grenzbereiche Orte erhöhter Turbulenz in der Flamme. Dies führt zu verstärkter Durchmischung des gerade dort zugeführten Schadgases mit dem Brenngas bzw. mit Brenngasprodukten. Für die an der Reaktion beteiligten molekularen Partner ergeben sich daraus kürzere Stosswege. Die erhöhte Turbulenz vermindert außerdem die Rückreaktion von Fluorkohlenstoffzwischenprodukten mit Fluor (z.B. CF₃-Radikale und Fluor zu CF₄) und fördert dagegen die Bildung von Fluorwasserstoff aus Fluor. Darüber hinaus wird durch die erfindungsgemäße Verfahrensweise der Wärmetransport aus den Flammenbereichen 1 und 2 in das zugeführte Schadgas verbessert. Ebenso verbessert sich die Ausbreitung des zugeführten Schadgases in die reduzierend wirkenden Flammenbereiche 1 und 2.

Beides wirkt sich günstig auf die thermisch-chemische Umsetzung der Schadstoffe aus. Letztlich wirkt dies alles in Richtung der Erhöhung der Schadstoffumsetzung und damit einer drastischen Verbesserung der Effizienz der Schadstoffbeseitigung.

In den reduzierenden Flammenbereichen 1 und 2 laufen parallel die Verbrennung von Brenngas ( z.B. C₃H₈ plus O₂ bzw. CH₄ plus O₂ zu CO₂ und H₂O), die thermische Zersetzung von Schadstoffen (Beispielreaktion CF₄ zu CF₃-Radikalen und F) sowie die Reduktion von Schadstoffen (Beispielreaktion CF₄ plus H₂ zu CHF₃ und HF) ab. Nur in geringem Umfang erfolgt in den reduzierenden Flammenbereichen die Oxidation von Schadstoffen und sekundären Schadstoffen.

Mit der Schaffung von zwei reduzierenden Flammenbereichen und dem koaxialen Einlass des Schadgases in deren Grenzfläche sind durch den auf diese Weise geometrisch vergrößerten, reduzierend wirkenden Volumenanteil der Flamme bessere Bedingungen für die Abgasreinigung gegeben.

Eine weitere Auswirkung der erfindungsgemäßen Verfahrensweise besteht darin, dass bei gegebenen Verbrauch an Brenngas mit höherer Effizienz ein größeres Volumen von Schadgas gereinigt werden kann.

Außer dem Anteil von Sauerstoff im zugeführten Brenngas-Sauerstoff-Gemisch wird zusätzlich Luft aus der Umgebung der Flamme auf den Flammenbereiche 1 und an der Spitze der Flamme auch auf den Flammenbereich2 zur Einwirkung gebracht. Diese zusätzliche Zufuhr von Luft oder Sauerstoff erfolgt durch Düsen bzw. Zuführungsrohre und wird damit gezielt auf die Flamme zur Einwirkung gebracht. Durch diese zusätzliche Luft bzw. diesen zusätzlichen Sauerstoff wird der Anteil von Sauerstoff im Mantel der Flamme und an deren Spitze erhöht. Die Zufuhr wird volumenmäßig derart gestaltet, dass ein Überschuss an Sauerstoff gegenüber dem stöchiometrischen Verhältnis von Brenngas zu Sauerstoff in Bereichen der Flamme erzielt wird (z.B. C₃H₈ : O₂ ≤ 1 : 5 bzw. CH₄ zu O₂ ≤ 1 : 2 ). Auf diese Weise bilden sich durch das Eindringen von Sauerstoff in die Flamme am Mantel des reduzierend wirkenden Flammenbereiches 2 und an der Spitze der Flamme stark oxidierende Flammenbereiche 3 und 4 aus.

Die Sauerstoffzufuhr in die Flamme wird derart gesteuert, dass andererseits die Flammenbereiche 1 und 2 in ausreichend großen Volumenanteilen ungestört reduzierend wirksam bleiben, um die gewünschte Schadstoffumsetzung zu erzielen. Entscheidend für die Wirkung der zusätzlichen Zufuhr von Sauerstoff ist, dass sich an der Spitze der Flamme in großem Abstand vom Brenner durch das Eindringen dieses Sauerstoffes dort ein über den ganzen Querschnitt der Flamme reichender oxidierender Flammenbereich 4 ausbildet. Insbesondere in diesen Flammenbereich 4, aber auch in den Flammenbereich 3, strömen, neben Gasen des verbrannten Brenngasgemisches (CO₂ und H₂O), in den reduzierend wirkenden Flammenbereichen 1 und 2 noch unverbrauchte Brenngasanteile (z.B. C₃H₈ bzw. CH₄), nicht oxidierbare sekundäre Schadstoffe (z.B. HF) und sekundär gebildete Stoffe (z.B. CO und C). Diese Stoffe werden nun in den Flammenbereichen 3 und besonders 4 weiter verbrannt (z.B. C₃H₈ in CO₂ und H₂O), vollständig oxidiert (z.B. C und CO in CO₂) oder unverändert weiter transportiert (z.B. HF). Die Bedingungen für eine vollständige Verbrennung bzw. Oxidation unverbrauchter Brenngasanteile bzw. sekundärer in den reduzierend wirkenden Flammenbereichen gebildeter Stoffe ist dort wegen des Überschusses an Sauerstoff bei gleichzeitig ausreichend hoher Temperatur gegeben.

In der erfindungsgemäßen Ausführung des Verfahrens werden den Flammenbereichen 1 und 2 unterschiedlich große Anteile unterstöchiometrischen Brenngas-Sauerstoff-Gemisches im gleichen Mischungsverhältnis getrennt zugeführt. Dabei wird in den umhüllenden Flammenbereich 2 ein größerer Anteil als in den zentralen Flammenbereich 1 eingelassen. Der den umhüllenden Flammenbereich 2 zugeführte Anteil beträgt 60% bis 85%, vorzugsweise 80%, des insgesamt zugeführten Brenngas-Sauerstoff-Gemisches. Durch die Anteile der Zufuhr des Brenngas-Sauerstoff-Gemisches wird erreicht, dass in der Grenzfläche der Flammenbereiche 1 und 2, in die die Zufuhr der Schadgase erfolgt, beidseitig der besagten Grenzfläche nahezu die gleichen Bedingungen für die Schadstoffumsetzung gegeben sind.

Zur Ausführung der erfindungsgemäßen Verfahrensweise gehört, dass das Mischungsverhältnis für das zugeführte Brenngas-Sauerstoff-Gemisch bei der Verwendung von Propan als Brenngas 1 : 3 bis 1 : 4, vorzugsweise 1 : 3,6 und bei Verwendung von Methan als Brenngas 1 : 1,2 bis 1 : 1,7, vorzugsweise 1 : 1,5, beträgt:

Aus technologischen Untersuchungen folgte, dass bei Einstellung des Mischungsverhältnisses im angegebenen Bereich einerseits Brenngas in ausreichender Menge verbrennt, um in den Flammenbereichen 1 und 2 die notwendig hohen Temperaturen für die thermische Zersetzung von Schadstoffbestandteilen bzw. die thermische Anregung von Schadstoffbestandteilen zur Reaktion zu gewährleisten, andererseits ausreichend Wasserstoff und andere reduzierend wirkende Radikale entstehen, um in den Flammenbereichen die erforderlichen Reaktionen zur chemischen Umsetzung der Schadstoffe zu erzielen. Die Höhe der für die Reduktion notwendigen Temperaturen hängt von der Art der Zu behandelnden Schadgase ab und liegt im Bereich 600°C bis größer 1200°C.

Es kann darüber hinaus auch zweckmäßig sein, das Brenngas-Sauerstoff-Gemisch zur Ausbildung der Flammenbereiche 1 und 2 in unterschiedlicher Zusammensetzung, auf jeden Fall aber unterstöchiometrisch, zuzuführen und zwar derart, dass im Gasgemisch für den umhüllenden Flammenbereich 2 das die Unterstöchiometrie charakterisierende Verhältnis größer eingestellt wird als für das Gasgemisch, das dem zentralen Flammenbereich 1 zugeführt wird. Da in den umhüllenden Flammenbereich 2 vom Mantel her Sauerstoff in diesen eindringt, wird das Volumen, in dem die Reaktionen unter reduzierenden Bedingungen ablaufen, eingeschränkt. Um diese, die Effektivität der Reinigung beeinträchtigende Wirkung zu kompensieren kann also zweckmäßigerweise in den Flammenbereich 2 ein Gemisch mit höherem Brenngasanteil eingelassen werden. Der erforderliche Kompensationseffekt wird mit einem 10% bis 30%ig höherem Anteil, vorzugsweise mit einem ca. 20% höherem Anteil, erzielt. Das Verhältnis des dem umhüllenden Flammenbereich 2 zugeführtem Brenngas-Sauerstoff wird dazu für ein C₃H₈ : O₂ Gemisch von z.B. 1 : 3,6 auf 1 : 3, für ein CH₄ : O₂ Gemisch von 1 : 1,5 auf 1 : 1,3 verändert.

Durch die erfindungsgemäße Verfahrensweise der Schadstoffumsetzung in der Flamme eines Brenners wird die Effektivität der Schadstoffumsetzung verbessert, da der Volumenanteil in der Flamme, in dem die für die Schadstoffumsetzung günstigeren, reduzierend wirkenden Bedingungen herrschen, größer gehalten werden kann, als ohne diese Maßnahme.

Das Verfahren wird mit einer Einrichtung ausgeführt, die im wesentlichen aus einer rotationssymetrischen Brennkammer (1) und einem in der Grundfläche (3) der Brennkammer angeordneten Brenner (4) besteht. Der Brenner hat eine zentrale Zuführung (5) und zwei koaxiale Zuführungen (6,7) für Gase. Erfindungsgemäß wird das unterstöchiometrische Gemisch von Brenngas und Sauerstoff durch die zentrale Zuführung (5) und die äußere, koaxiale ringförmige Zuführung (7) und das Abgas durch die innere, koaxiale ringförmige Zuführung (6) zugeführt.

Durch die Art der Zufuhr von Brenngas-Sauerstoff-Gemisch bilden sich über dem Brenner der zentrale Flammenbereich 1 und der diesen umhüllende Flammenbereich 2 getrennt aus. Die getrennte Zuführung gewährleistet sowohl die Realisierung der Zufuhr von unterschiedlichen Volumenanteilen des Brenngas-Sauerstoff-Gemisches als auch die Zufuhr der einzelnen Volumenanteile in unterschiedlicher Zusammensetzung.

Die Abmessungen des Brenners haben einen wesentlichen Einfluß auf die Ausbildung der Flammenbereiche und ihrer Wirksamkeit.

Es ist vorteilhaft, die zentrale Zuführung des Brenners aus mindestens drei Bohrungen mit einem Durchmesser von 1 mm bis 2,5 mm, vorzugsweise 1,4 mm, auf einem Kreis mit einem Radius R₁ = 3 mm bis 5 mm, vorzugsweise 4 mm, auszuführen. Durch die Ausführung der zentralen Zuführung als Mehrlochsystem wird gesichert, dass sich der zentrale Flammenbereich 1 als ausgedehnte stabile Kernflamme ausbildet, auch wenn nur der geringere Anteil des insgesamt zugeführten Brenngas-Sauerstoff-Gemisches durch diesen Teil des Brenners strömt.

Eine vorteilhafte Ausgestaltung für die innere, koaxiale Zuführung besteht darin, dass diese als geschlossener Ringspalt von 3 bis 8mm Breite, vorzugsweise 6 mm Breite, ausgeführt ist. Die Zuführung für das Schadgas ist zweckmäßig relativ großflächig gegenüber den Zuführungen für das Brenngas-Sauerstoff-Gemisch auszuführen, um Ablagerungen aus dem Schadgas und damit Störungen zu vermeiden.

Die äußere, koaxiale Zuführung wird durch gleichabständige Bohrungen oder Spalte auf einem Kreis mit dem Radius R₃ realisiert.

Für die geometrische Gestaltung des Brenners ist es wichtig, dass der Abstand ΔR des Kreises mit dem Radius R₃, auf dem die Spalte bzw. Bohrungen der äußeren Zufuhr angeordnet sind, vom Kreis mit dem Radius R₁, der inneren Lochreihe der zentralen Zufuhr mit dem Radius R₁ der Bedingung R₃ - (R₁+ a + b) = ΔR < 5 - 12 mm genügt, wobei a der Radius der Einzelbohrung der zentralen Zuführung und b der Radius oder die halbe Spaltbreite der äußeren Zuführung bezeichnet.

Durch die Einhaltung der besagten Regel für den Abstand ΔR der Lochkreise R₁ und R₃ wird gesichert, dass sich die Flammenbereiche 1 und 2 sehr eng berühren und sich in der Grenzfläche gegenseitig beeinflussen. Dies ist eine wichtige Bedingung dafür, dass das in diese Grenzfläche einströmende Schadgas einerseits die notwendigen Temperatur- und reduzierenden Bedingungen vorfindet andererseits von der Grenzfläche ausgehend in die reduzierende Flammenbereich expandieren kann.

Es kann darüber hinaus auch zweckmäßig sein, dass die einzelnen Kanäle (Bohrungen oder Spalte) der äußeren Zufuhr gegen die Achse des Brenners um 10° bis 20°, vorzugsweise um 15°, geneigt gestaltet sind. Dies ist insbesondere von Vorteil, wenn besagter Abstand ΔR größer als 12 mm ausgeführt ist. Auf diese Weise wird gesichert, dass auch in diesem Fall zwischen den Flammenbereichen 1 und 2 eine enge Berührung erfolgt, so dass die optimalen thermischen und reduzierenden Bedingungen für die notwendigen Schadstoffreaktionen aufrecht erhalten werden.

Die zusätzliche Luft bzw. der zusätzliche Sauerstoff zur Einwirkung auf den Mantel des Flammenbereiches 2 und auf die Spitze der Flamme wird zweckmäßiger weise durch drei auf dem Umfang verteilte Düsen in der Grundfläche der Brennkammer im Bereich des Brenners zugeführt. Die Zuführung der zusätzlichen Luft bzw. des zusätzlichen Sauerstoffes kann aber auch durch ein Zuführungsrohr in Gestalt eines Ringkanals mit mindestens 5 Bohrungen zum Einlass bewerkstelligt werden. Der Ringkanal ist dabei auf der Grundfläche der Brennkammer im Bereich des Brenners anzuordnen. Die Düsen bzw. Bohrungen im Ringkanal sind derart ausgeführt, dass der Luft- bzw. Sauerstoffstrom durch sie etwa in Richtung der Achse der Brennkammer erfolgt. Es kann aber auch zweckmäßig sein, die Düsen oder die Bohrungen derart anzuordnen, dass der Sauerstoffstrom geneigt in einem Winkel von 10° bis 30° zur Achse der Brennkammer erfolgt.

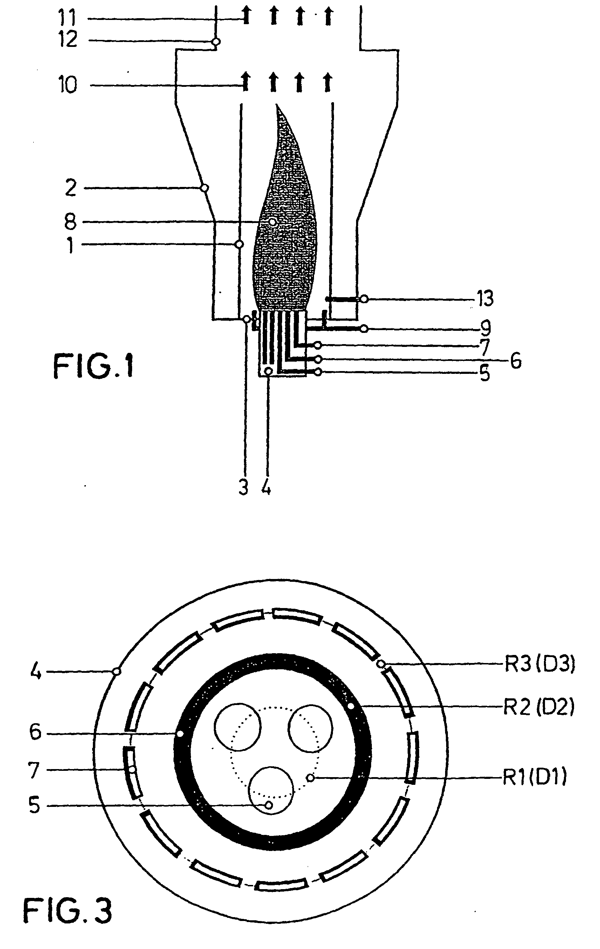

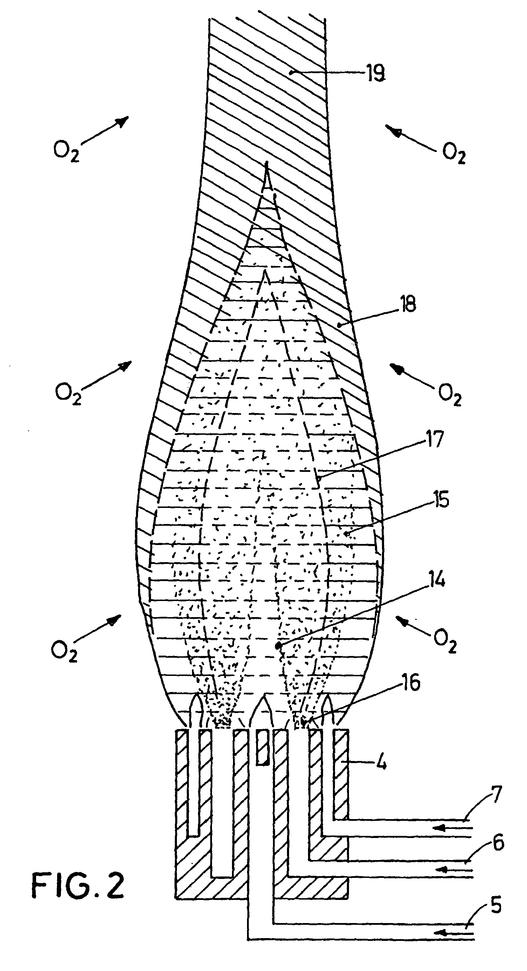

Die Erfindung wird im Folgenden anhand eines Verfahrensbeispiels und anhand der Zeichnung Fig. 1 bis Fig. 3 einer bevorzugten Ausführungsform der Einrichtung näher erläutert. Es zeigen:
- Fig. 1: die Einrichtung in einem schematischen Längsschnitt,
- Fig. 2: die schematische Darstellung der Flammenbereiche und des Einlasses sowie die Ausbreitung des Schadstoffes in der Flamme, und
- Fig. 3: die schematische Aufsicht des Brenners.

Die Einrichtung besteht im wesentlichen aus einer zylindrischen Brennkammer (1) aus einem korrosionsbeständigen Material in einem Gehäuse (2). Die Brennkammer 1 hat einen Durchmesser von 10 cm und eine Höhe von 40 cm. In der Grundfläche (3) ist der Brenner 4 angeordnet. Er besitzt eine zentrale Zuführung 5, die aus drei Bohrungen mit Radien von je 0,7 mm besteht. Die Bohrungen sind auf einem Lochkreis mit einem Durchmesser D₁ = 4 mm angeordnet. Der Brenner hat in seiner Stirnfläche eine innere, koaxiale, ringförmige Zuführung (6) mit einem in sich geschlossenem Spalt von 6 mm Breite und einem mittleren Durchmesser D₂ von 18 mm. Für eine äußere, koaxiale, ringförmige Zuführung (7) sind auf einem zweiten Lochkreis mit dem Durchmesser D₃ = 28 mm eine Anzahl von Spalten von 1,5 mal 1,2 mm angeordnet.

Die Anzahl der Bohrungen und Spalte und ihre Abmessungen werden bei gegebenem Volumen des Brenngas-Sauerstoff-Gemisches durch die Einhaltung der Bedingung bestimmt, dass die Austrittsgeschwindigkeit des Brenngas-Sauerstoff-Gemisches aus den Bohrungen bzw. Spalten größer sein muß als die Flammengeschwindigkeit, jedoch kleiner als die zehnfache Flammengeschwindigkeit.
Der Außendurchmesser des Brenners beträgt insgesamt ca 50 mm.

Über den drei Bohrungen auf dem Lochkreis D1 bildet sich der zentrale Flammenbereich 1 (14) und über den Spalten auf dem Lochkreis D₃ der umhüllende Flammenbereich 2 (15) aus, die zusammen mit den Flammenbereichen 3 (18) und 4 (19) die Flamme (8) über dem Brenner bilden. Das Abgas mit den toxischen Schadstoffen wird durch die innere, koaxiale, ringförmige Zuführung (6) in die Grenzfläche (17) zwischen den Flammenbereichen 1 und 2 eingeführt.

Am Boden der Brennkammer wird durch Düsen (9), die in der Grundfläche der Brennkammer verteilt sind, Luft in die Brennkammer eingelassen. Sie wirkt auf die Flammenbereiche 1 und 2 ein und bildet die Flammenbereiche 3 (18) und 4 (19).

Nach der Behandlung des Schadgases in der Flamme (8) strömen die Verbrennungsgase und das behandelte Abgas in Pfeilrichtung (10) und (11) entweder in den Abluftkanal (12) oder in Einrichtungen zur Durchführung weiterer Teilprozesse einer mehrstufigen Abgasreinigung.

Die Einrichtung wird komplettiert durch eine Zündelektrode für das Brenngasgemisch und einen Monitor (13) der Sensorsignale zur optimalen Steuerung der Einrichtung zur Abgasreinigung liefert.

Beispiel für die Ausführung der Verfahrensweise:
In einer Plasma-Ätzanlage zum Abscheiden Siliziumoxidschichten auf Siliziumwafem fallen bei der Ausführung des plasmachemischen Prozessschrittes Kammerreinigen' 120 Liter pro Minute Abgas an. Das Abgas besteht im wesentlichen aus 117 Litern pro Minute Stickstoff und ca. 3 Litern pro Minute C₂F₆ als Schadstoff. Das Abgas wird nach Kompression auf Normaldruck der Reinigungseinrichtung durch eine Abgasleitung zugeführt.

In der Brennkammer (1) wird durch die zentrale Zuführung des Brenners (5) ein Gemisch von 1,4 Litern pro Minute Propan und 5 Liter pro Minute Sauerstoff eingeleitet. Über die koaxialen Zuführung (7) werden 4,7 Liter pro Minute Propan und 14 Liter pro Minute Sauerstoff eingeleitet. Sowohl über die zentrale Zuführung (5) als auch über der koaxialen Zuführung (7) bilden sich zwei stabile Flammen, die Flammenbereiche 1 (14) und 2 (15) aus. Sie wirken beide stark reduzierend, der Flammenbereich 1 wegen des im Verhältnis 1 : 3,6 und der Flammenbereich 2 wegen des im Verhältnis 1 : 3 eingelassenen Brenngases und Sauerstoffes.
In der zentralen Zuführung (5) wird etwa ein Anteil von 25% des insgesamt ein-gelassenen Brenngas-Sauerstoff-Gemisches zugegeben.

Durch den Spalt der inneren konzentrischen Zuführungen (6) wird das zu reinigende Abgas (16) in die Grenzfläche (17) zwischen den Flammenbereichen 1 und 2 eingeführt. In diesen Flammenbereichen wird der Schadstoff aktiviert und thermisch aufgespalten und durch Reaktionen praktisch vollkommen in CH₄ und HF umgesetzt
Durch die Düsen (9) wird 65 bis 110 Liter Luft pro Minute eingelassen. Diese eingelassene Luft wirkt allseitig auf die Flamme ein und bildet um den Flammenbereich 1 und 2 die stark oxidierend wirkenden Flammenbereiche 3 (18) und 4 (19). In diesen Flammenbereichen ändert sich durch die eingelassene Luft das Verhältnis des dort noch vorhandenen bisher unverbrannten Propans zu Sauerstoff auf Werte bis über das stöchiometrische Verhältnis von 1 : 5. Sie wirken infolgedessen oxidierend. Die hier vorzugsweise ablaufenden Reaktionen sind die abschließende und damit vollständige Verbrennung von Propan zu Kohlendioxid und Wasserdampf und die weitere chemische Umsetzung noch vorhandener primärer vor allem aber sekundärer Schadstoffe und die Oxidation von in den reduzierenden Flammenbereichen entstandenen Kohlenstoff und Kohlenmonoxid zu Kohlendioxid.

Die etwa 1000°C heißen verbrannten Gasgemische und das behandelte Abgas strömen aus der Flamme in Richtung der Pfeile (10) und (11) zur Absaugung (12). Auf dem Weg dorthin und in der anschließenden an sich bekannten Wacheinrichtung werden sie auf unter 50°C abgekühlt. Der Wasserstofffluoridanteil wird hydrolisiert und in einer Lauge neutralisiert. Das Gas wird gereinigt, d.h. schadstofffrei, an die Umgebung abgegeben.

Mit der erfindungsgemäßen Verfahrensweise zur Abgasreinigung wird eine Reduzierung des Schadstoffgehaltes auf weniger als 1% erreicht. Infolgedessen gelangt ein Gas mit weniger als 10 ppm Schadstoff in die Abluft. Der durch die erfindungsgemäße Lösung erzielte Fortschritt wird besonders evident unter Beachtung der Tatsache, dass diese hohe Effizienz hinsichtlich der Schadstoffbeseitigung für ein verdoppeltes Schadgasvolumen im Vergleich zu angeführten konventionellen Lösungen erzielt wurde. Eine weitere Auswirkung der Erfindung besteht darin, dass bei verdoppeltem Schadgasfluss im Brenner auch der NOₓ-Austrag gleich niedrig gehalten werden kann.

## Patentansprüche

1. Verfahren zur Reinigung schadstoffhaltiger Abgase, insbesondere mit Fluorkohlenwasserstoffen oder anderen fluorhaltigen Verbindungen, durch thermisch-chemische Umsetzung in einer Brennkammer mit einem Brenner zur Erzeugung einer Brenngasflamme, in der gezielt und örtlich getrennt reduzierend bzw. oxidierend wirkende Flammenbereiche realisiert sind, **dadurch gekennzeichnet, dass** über dem Brenner zentral ein Flammenbereich 1 erzeugt wird, dass durch getrennten Brenngaseinlass ein den Flammenbereich 1 umhüllender Flammenbereich 2 erzeugt wird, dass beide Flammenbereiche mit einem unterstöchiometrischen, d. h. durch einen Überschuss an Brenngas charakterisiertes Brenngas-Sauerstoff-Gemisch gespeist werden, dass in die Grenzfläche der Flammenbereiche 1 und 2 das Abgas koaxial eingelassen wird und dass durch Düsen oder einen Ringkanal um den Brenner Luft oder Sauerstoff zusätzlich eingelassen wird, wodurch am Mantel des Flammenbereiches 2 und an der Spitze der Flamme oxidierend wirkende Flammenbereiche 3 und 4 ausgebildet werden.

2. Verfahren nach Anspruch 1, **dadurch gekennzeichnet, dass** den Flammenbereichen 1 und 2 unterschiedliche Anteile des unterstöchiometrischen Brenngas-Sauerstoff-Gemisches im gleichen Mischungsverhältnis zugeführt werden und dass der Anteil des zugeführten Gemisches für den umhüllenden Flammenbereich 2 60% bis 85% des insgesamt zugeführten Gemisches beträgt.

3. Verfahren nach Anspruch 1 und 2, **dadurch gekennzeichnet, dass** das Mischungsverhältnis des zugeführten Brenngas-Sauerstoff-Gemisches bei der Verwendung von Propan als Brenngas 1:3 bis 1:4, vorzugsweise 1:3,6, und bei der Verwendung von Methan als Brenngas 1:1,2 bis 1:1,7, vorzugsweise 1:1,5, beträgt.

4. Verfahren nach Anspruch 1, **dadurch gekennzeichnet, dass** zur Ausbildung der Flammenbereiche 1 und 2 Brenngas-Sauerstoff-Gemische unterschiedlicher Zusammensetzung zugeführt werden und zwar derart, dass im Gasgemisch für den umhüllenden Flammenbereich 2 das die Unterstöchiometrie charakterisierende Verhältnis um 10% bis 30%, vorzugsweise 20%, größer ist als für das Brenngas-Sauerstoff-Gemisch, das dem zentralen Flammenbereich 1 zugeführt wird.

## Claims

1. A method of purifying noxious exhaust gases, in particular containing fluorohydrocarbons or other fluorine compounds, by thermal chemical reaction in a combustion chamber with a burner for generation of a combustible-gas flame where flame zones of reducing or oxidizing action are implemented selectively and locally separated, **characterized in that** a flame zone 1 is produced centrally above the burner; **in that**, by separated combustible-gas feed, a flame zone 2 is produced, enveloping the flame zone 1; **in that** both flame zones are fed by a substoichiometric mixture of combustible gas and oxygen i.e., by a mixture **characterized by** an excess of combustible gas; in that the exhaust gas is supplied coaxially to the interface between the flame zones 1 and 2; and in that air or oxygen is additionally admitted through nozzles or a ring channel around the burner, whereby flame zones 3 and 4 of oxidizing action form on the envelope of the flame zone 2 and at the tip of the flame.

2. A method according to claim 1, **characterized in that** different portions of the substoichiometric mixture of combustible gas and oxygen are fed to the flame zones 1 and 2 in the same mixing ratio; and **in that** the portion of the mixture supplied to the enveloping flame zone 2 amounts to 60 to 85 percent of the totally supplied mixture.

3. A method according to claim 1 and 2, **characterized in that** the mixing ratio of the supplied mixture of combustible gas and oxygen is 1 : 3 to 1 : 4, preferably 1 : 3.6, when propane is the combustible gas used, and 1 : 1.2 to 1 : 1.7, preferably 1 : 1.5, when methane is the combustible gas used.

4. A method according to claim 1, **characterized in that,** for formation of the flame zones 1 and 2, mixtures of combustible gas and oxygen of varying composition are fed in such a way that, in the gas mixture supplied to the enveloping flame zone 2, the ratio which characterizes the sub-stoichiometry is by 10 to 30 percent, preferably 20 percent, greater than that of the mixtures of combustible gas and oxygen supplied to the central flame zone 1.

## Revendications

1. Procédé de purification d'effluents gazeux contenant des éléments polluants, en particulier avec des hydrocarbures fluorés ou d'autres composés fluorés, par réaction thermique-chimique dans une chambre de combustion avec un brûleur pour produire une flamme de gaz de combustion, dans laquelle on réalise des zones de flamme agissant de manière réductrice et respectivement, oxydante, séparées de manière ciblée et localisée, **caractérisé en ce que** l'on produit dans le brûleur, de manière centrale, une zone de flamme 1, **en ce que** par admission séparée du gaz de combustion, on produit une zone de flamme 2 entourant la zone de flamme 1, **en ce que** les deux zones de flamme sont alimentées d'un mélange gaz de combustion-oxygène sous-stoechiométrique, à savoir **caractérisé par** un excès de gaz de combustion, en ce que dans la surface limite des zones de flamme 1 et 2, les effluents gazeux sont alimentés de manière coaxiale et en ce que par des buses ou un canal annulaire autour du brûleur, de l'air ou de l'oxygène supplémentaire est admis, ce par quoi sur le manteau de la zone de flamme 2 et sur la pointe de la flamme, se forment des zones de flamme 3 et 4 agissant de manière oxydante.

2. Procédé selon la revendication 1, **caractérisé en ce que** les zones de flamme 1 et 2 sont alimentées de différentes quantités du mélange gaz de combustion-oxygène sous-stoechiométrique en même rapport de mélange et **en ce que** la quantité du mélange alimenté pour la zone de flamme 2 enveloppante se situe dans l'intervalle allant de 60% à 85% du mélange alimenté total.

3. Procédé selon la revendication 1 et 2, **caractérisé en ce que** le rapport de mélange du mélange gaz de combustion-oxygène alimenté se situe dans l'intervalle allant de 1:3 à 1:4, de préférence à 1:3,6 lors de l'utilisation de propane comme gaz de combustion, et dans l'intervalle allant de 1:1,2 à 1:1,7, de préférence à 1:1,5 lors de l'utilisation de méthane comme gaz de combustion.

4. Procédé selon la revendication 1, **caractérisée en ce que** pour la formation des zones de flamme 1 et 2, on alimente des mélanges gaz de combustion-oxygène de différentes compositions, et cela de sorte que dans le mélange gazeux pour la zone de flamme 2 enveloppante, le rapport caractérisant la sous-stoechiométrie est de 10% à 30%, de préférence de 20% supérieur à celui du mélange gaz de combustion-oxygène, qui est alimenté à la zone centrale de flamme 1.
